# EUROPÄISCHE PATENTANMELDUNG

(11) **EP 1 974 991 A2**
(43) Veröffentlichungstag der Anmeldung: **01.10.2008**
(21) Anmeldenummer: 08003470.5
(22) Anmeldetag: 26.02.2008
(51) Int. Cl.: B60N 2/56

(54) **Elektrische Sitzheizung sowie Sitzpolsterung mit einer solchen Sitzheizung**

(30) Priorität: 26.03.2007 DE 102007014904; 25.04.2007 DE 102007019843
(71) Anmelder: I.G. Bauerhin GmbH, 63584 Gründau (DE)
(72) Erfinder: Michelmann, Jochen, 63571 Gelnhausen (DE)
(74) Vertreter: Grimm, Ekkehard

(57) **Zusammenfassung**

Die Erfindung betrifft eine lektrische Sitzheizung mit Heizleitern, die in mindestens zwei Segmente unterteilt ist, wobei die zwei Segmente durch mindestens einen elektrischen Leiter verbunden sind, die dadurch gekennzeichnet ist, dass zwischen den Segmenten entlang des jeweiligen elektrischen Leiters ein Kunststoff-Folienstreifen verläuft. Weiterhin betrifft die Erfindung eine Sitzpolsterung mit einer solchen Sitzheizung.

## Beschreibung

Die Erfindung betrifft eine elektrische Sitzheizung mit Heizleitern, die in mindestens zwei Segmente unterteilt sind, wobei die zwei Segmente durch mindestens einen elektrischen Leiter verbunden sind. Weiterhin betrifft die Erfindung eine Sitzpolsterung mit einer solchen Sitzheizung, wobei die Polsterung mindestens zwei Segmente aufweist, die durch Gräben und/oder Taschen und/oder Schubladen getrennt sind, und wobei jedes Segment ein Heizelement mit Heizleitern aufweist und die Heizelemente der Segmente durch mindestens einen elektrischen Leiter verbunden sind.

Zum Beheizen von Sitzen, Sitzflächen oder PKW-Sitzen werden Heizelemente benötigt, die in der Regel aus metallischen Heizleitern oder Kohlefasern bestehen, die auf einer textilen Lage oder auf Schaummaterialien aufgebracht sind oder in textilen Lagen und/oder Schaummaterialien eingebettet sind. Diese Heizelemente sind erheblichen mechanischen Beanspruchungen durch die wechselnden Belastungen bei der Benutzung des Sitzes insbesondere während des Fahrbetriebs unterworfen. Bei derartigen Heizelementen können durch Materialermüdung Brüche der Heizleiter entstehen, die letztendlich zum Ausfall der Heizung führen. Faltenbildung durch Dehnen und Verschieben von Heizung und Bezug sowie durch Einsinken des Unterpolsters, zum Beispiel des Schaumkerns, begünstigen einen solchen Ausfall. Wird ein Heizelement durch einen Abspanngraben (hierbei handelt es sich um eine Vertiefung zwischen zwei Polstersegmenten) einer Sitzfläche oder in eine bewegliche Sitztiefenverstellung geführt, so treten insbesondere im Bereich des Ein- und Auslaufs Falten und hohe Biegewechselzyklen am Heizleiter und dem Grundmaterial auf. Auch ein in den Graben gegebenenfalls eingebrachter Abspanndraht, der den Heizleiter nach unten in dem Graben fixiert, kann den Leiter mechanisch sehr stark belasten.

Wird der Leiter als Heizleiter ausgebildet, so erzeugt dieser gerade bei engen Durchführungen, d. h. schmalen und tiefen Furchen zwischen zwei Segmenten, hohe Verlustleistungen und Wärmeentwicklung. Zum einen muss der Heizleiter bei engen Gräben fast an der gleichen Stelle ein- und wieder auslaufen, wodurch sich die Leistungen addieren. Zum anderen wird gleichzeitig die Wärmeabfuhr durch das Polster stark behindert.

Um das Problem der mechanischen Haltbarkeit zu lösen, werden Leiter aus den unterschiedlichsten Stoffen, wie beispielsweise Stahl oder metallisierten Kunststofffasern, eingesetzt; darüber hinaus sind auch Kern-Mantel-Drähte im Einsatz.

Eine weitere Möglichkeit, die angewandt wird, ist diejenige, Heizleiter und Kontaktleiter wellenförmig anzuordnen, um diese bei Biegebeanspruchungen in die Wellen ein- und ausfedern zu lassen. Dabei steigt aber die Heizleitertemperatur stark an, da ein Wellenzug mehr Wärmeleistung abgibt als ein gestreckter Leiter, wenn man die gleiche Stromstärke voraussetzt. Ein entsprechendes Flächenheizelement mit solchen wellenförmig angeordneten Heizleitern und Kontaktleitern ist in der DE 4101290 A1 beschrieben.

Beispiele, um zwei Heizelemente, die getrennt voneinander Polsterabschnitten zugeordnet sind, über einen Abspanngraben zu verbinden, sind in der DE 3544499 C1 und der DE 81737914 U1 beschrieben.

Die DE 3544499 C1 gibt eine Heizleiterverbindung zwischen durch einen im Polsterkern vorgesehenen Abspanngraben getrennten, elektrisch beheizten Sitz- bzw. Lehnenflächen zur Sitzbeheizung von Fahrzeugen an. Um einen Verbindungsleiter durch den Abspanngraben zu führen, wird ein Kupferband aus einem Gewebe oder Gewirke vorgeschlagen, auf dem der Heizleiter wellenförmig verlegt ist. Das Kupferband wird durch einen Abspanndraht nach unten in den Graben hinein fixiert und somit auf Zug gehalten. Gewebte oder gewirkte Steifen aus Kunststofffasern und auch aus Metalldrähten wie in der DE 3544499 C1 sind, nicht geeignet, Wärme abzuleiten, solange die Drahtdurchmesser so gewählt sind, dass diese flexibel bleiben. Bei dünnen Drähten ist die Wärmeleitfähigkeit eingeschränkt, da sich viel Luft zwischen den Filamenten befindet und so die Isolationseigenschaften verbessert.

Die DE 8137914 U1 beschreibt eine elektrische Verbindungsvorrichtung zwischen zwei Flächenheizabschnitten; zwischen Anschlusspunkten von zwei elektrischen Flächenheizelementabschnitten ist eine vieladrige Leiterlitze angeordnet.

Weitere Verfahren, um die elektrische Verbindung zwischen zwei Anschlusspunkten von Flächenheizelementen, die durch einen Graben getrennt sind, zu stabilisieren, sind Verstärkungen mittels textilen Materialien in Form von Vlies, Filz und Geweben, die letztendlich dazu dienen sollen, den Biegeradius zu vergrößern und damit die Biegezyklenzahl bis zu einem Bruch zu erhöhen.

Das Problem der hohen Temperaturen im Bereich der Durchführung durch einen Graben wurde in Vergangenheit fast ausschließlich dadurch gelöst, dass die Verlustleistung reduziert wurde. Das kann dadurch geschehen, dass ein zu den elektrischen Daten des Heizleiters unterschiedlicher, niederohmiger, separater Leiter zur Durchführung verwendet wird. Dieser Leiter wird dann so eingebracht, dass der eigentliche Heizleiter aufgetrennt wird und in die Trennstelle ein Leiter in Form einer Brücke eingefügt wird. Nachteile solcher Lösungen sind der hohe Montageaufwand und hohe Zusatzkosten, die durch diese Verbindungstechnik entstehen, sowie das zusätzliche Material. Darüber hinaus ist es problematisch, die Verbindungsstelle wieder so zu verschließen, dass keine Korrosion auftritt.

Die DE 1891074 schlägt den Einsatz von einzeln isolierten Filamenten zur Verbindung der Heizelemente vor, um Heißpunkte bei beginnenden Brüchen aufgrund der wiederholten Wechselbeanspruchungen zu vermeiden; allerdings gestaltet sich das Verbinden dieser einzeln isolierten Filamente mit den Heizleitern als sehr aufwändig mit den sich dadurch ergebenden Nachteilen.

Aufgabe der vorliegenden Erfindung ist es, die Heizleiter von zwei Heizelementen so mit mindestens einem elektrischen Leiter zu verbinden, dass dieser elektrische Leiter durch einen Graben, eine Tasche oder durch eine Schublade in Form einer so genannten Sitztiefenverstellung oder eine andere hoch belastete, zu Knicken neigende Stelle geführt werden kann, ohne dass der elektrische Leiter einen minimalen Biegeradius unterschreitet; wobei ein solcher minimaler Biegeradius auch dann erhalten bleiben soll, wenn sich das den elektrischen Leiter umgebende Textil- oder Schaummaterial in Falten legt, deren Radien kleiner sind als der minimal zulässige Biegeradius des elektrischen Leiters. Weiterhin soll die entstehende punktuelle Wärme verteilt werden, um damit lokale Temperaturerhöhungen zu reduzieren.

Diese Aufgabe wird gelöst durch eine elektrische Elektrische Sitzheizung mit Heizleitern, die in mindestens zwei Segmente unterteilt sind, wobei die zwei Segmente durch mindestens einen elektrischen Leiter verbunden sind, die dadurch gekennzeichnet ist, dass zwischen den Segmenten entlang des jeweilign elektrischen Leiters ein Kunststoff-Folienstreifen verläuft.

Die Aufgabe wird auch gelöst durch eine Sitzpolsterung mit einer solchen Sitzheizung, wobei die Polsterung mindestens zwei Segmente aufweist, die durch Gräben und/oder Taschen und/oder Schubladen getrennt sind, und wobei jedem Segment ein Heizelement mit Heizleitern zugeordnet ist und die Heizelemente der Segmente durch mindestens einen elektrische Leiter verbunden sind, wobei zwischen den Segmenten entlang des jeweiligen elektrischen Leiters ein Kunststoff-Folienstreifen verläuft.

Indem mit dem Leiter ein Folienstreifen geführt wird und der Leiter zum Foliensteifen in geringem Abstand angeordnet ist, vorzugsweise unmittelbar auf dem Folienstreifen aufliegend, wird der Biegeradius von auftretenden Biegungen im Wesentlichen durch den Folienstreifen bestimmt.

Bevorzugt sollte der Folienstreifen in einem wärmeleitendem Kontakt mit dem elektrischen Leiter stehen. Durch die Wärmeleitfähigkeit des Folienstreifens wird die Wärme des damit in Kontakt stehenden, stromdurchflossenen Leiters verteilt und abgeführt, so dass der elektrische Leiter gekühlt wird.

Es hat sich herausgestellt, dass insbesondere Folienstreifen aus Polyimid sehr gut geeignet sind. Polyimid ist sehr resistent gegen hohe Biegewechselbeanspruchungen. Des Weiteren zeigen die Polyimide hervorragende Eigenschaften bezüglich Langzeitstabilität und Korrosionsstabilität unter Einfluss von Feuchtigkeit und hohen Salzkonzentrationen, wie diese in Sitzen auftreten können. Da die Temperaturbeständigkeit weit über 300 °C reicht, sind hohe Heizleitertemperaturen ohne Beeinflussung der Folie möglich. Die Wärmeleitfähigkeit des Kunststoffs führt dazu, die Wärme vom Leiter weg zu transportieren. Bevorzugt sollte eine Folie aus Polyimid eingesetzt werden, die unter der Bezeichnung "Kapton" (Kapton ist ein Markenname der Firma Dupont) erhältlich ist.

Gegebenenfalls können auch Folienstreifen aus PET eingesetzt werden. PET (Polyethylenterephthalat) zeigt allerdings etwas geringere Zykluszahlen bezüglich der Biegewechselbeanspruchung sowie etwas geringere wärmeabführende Eigenschaften im Vergleich zu Polyimiden. Da der Schmelzpunkt von PET relativ gering ist, ist PET nur unterhalb von 80 °C einsetzbar.

Ein großer Vorteil, den Folienstreifen aus speziellen, ausgesuchten Kunststoffen haben, ist die Eigenschaft, hohen Heizleitertemperaturen zu widerstehen. Da zum Beispiel die Wärmeleitfähigkeit eines Hochtemperaturkunststoffes, wie Polyimid, den Heizleiter dadurch kühlt, dass der Heizleiter den Streifen berührt oder auf diesen aufgeklebt ist und die Wärme durch die Wärmeleiteigenschaft auf die Streifenbreite verteilt werden kann, können so trotz des Wärme erzeugenden Heizleiters Grabenübergänge realisiert werden. Die Oberfläche eines etwa 1 cm breiten und 10 cm langen Kunststoffstreifens ist zum Beispiel ca. 20-mal größer die eines gleichlangen Leiters mit 2,5 mm Durchmesser.

Wird der Leiter mittels Klebetechnik mit dem Folienstreifen verbunden, so kann sich der Leiter vom Folienstreifen nicht trennen und somit eventuell entstehende Wärme gut abgeben. Geeignete Kleber sind in erster Linie Acrylatklebebänder, da diese Ihre Haftungsfähigkeit und Flexibilität über Jahre hinweg behalten und durch im Wasser gelöstes Salz kaum beeinflusst werden.

Die Foliendicke sollte bevorzugt so gewählt werden, dass sich zum einen ein minimaler nicht zu unterschreitender Biegeradius einstellt und zum anderen Abzeichnungen und Aufwölbungen an der Oberfläche vermieden werden. Es hat sich gezeigt das Foliendicken zwischen 50 und 500 Mikrometer je nach verwendeter Leiterdicke und Sitzbezugsdicke gute Ergebnisse ergeben.

Dadurch ist es möglich, einen Heizleiter ohne kostenintensive Brückenlitzen und damit aufwendiger Löt- und Montagetechnik durch Gräben und mechanisch hoch belastete Stellen zu führen, welche zusätzlich thermisch isoliert beziehungsweise abgedeckt sein können. Der Heizleiter kann damit aus einem Stück ohne Lötstellen und Unterbrechungen eingebracht sein.

Sowohl der elektrische Leiter als auch der Folienstreifen können zwischen einer oberen und unteren Decklage eingebettet werden, um dadurch Folienstreifen und elektrischer Leiter in ihrer Lage zu fixieren und darüber hinaus den elektrischen Leiter zur Außenseite hin, insbesondere zur Sitzfläche hin, zu isolieren.

Der elektrische Leiter, wie er auf dem Kunststoff-Folienstreifen gehalten ist, kann Teil der die Wärme erzeugenden Heizleiter der Heizelemente sein. So kann der elektrische Leiter auch ohne Unterbrechung von Heizelement zu Heizelement, über den Folienstreifen verlaufend, geführt werden. In einer anderen Ausgestaltung kann der elektrische Leiter ein zum Heizleiter unterschiedlicher Brückenleiter sein, der die Heizleiter der Heizelemente elektrisch verbindet.

Es hat sich gezeigt, dass sich Materialien, die als Folienstreifen Verwendung finden, ebenso als Umhüllung um einen Leiter herum Vorteile bezüglich der Biegewechselzyklen haben, sofern die Wandstärke der Umhüllung mindestens 20% des Leiterdurchmessers beträgt.

Der Heizleiter kann mittels Sticktechnik auf einem Träger aufgebracht werden. Verwendet man die Sticktechnik, um den Heizleiter aufzubringen, können eine Decklage sowie eine Klebeschicht entfallen, so dass zum Beispiel im Graben die Gesamtdicke reduziert werden kann. Wenn der Leiter auf den Folienstreifen direkt aufgestickt ist, ergeben sich besonders gute mechanische Verbindungen zwischen Heizleiter und Folie, ohne dass Kleber verwendet werden muss.

Durch die Wärmeverteilungen des Folienstreifens ist auch die wellige Durchführung ohne Überhitzung durchführbar.

Letztendlich ist gerade bei einzelisolierten Filamenten eines Heizleiters, bei dem ein Grabenübergang mittels einer separaten Brückenlitze ausgeschlossen ist, der Folienstreifen eine einfache und wirkungsvolle Lösung. Werden nämlich einzelne isolierte Litzen eines Leiters außer an ihren Enden noch mehrfach zwischendurch elektrisch verbunden, so wird die reine Parallelschaltung und damit die Unabhängigkeit der einzelnen Litzen aufgehoben und bei Unterbrechung einzelner Filamente können die verbleibenden Filamente überlastet werden. Jede Brückenlitze erzeugt jedoch eine solche Verbindung, wenn die Filamente der Brückenlitze nicht gegeneinander isoliert sind.

Für Brückenlitzen, welche in der Regel in einem höheren Querschnitt und damit besserer Leitfähigkeit ausgelegt sind, ist der Leistungsumsatz geringer, so dass hier ausschließlich die mechanische Stabilität verbessert ist.

Weitere Einzelheiten und Merkmale der Erfindung ergeben sich aus der nachfolgenden Beschreibung von Ausführungsbeispielen anhand der Zeichnung. In der Zeichnung zeigt
- Figur 1: eine schematische Darstellung der Polsterung eines Sitzes im Bereich von zwei Segmenten, die durch einen Graben getrennt sind,
- Figur 2: einen Sitz, in dem die Polsterung, wie sie ausschnittsweise in Figur 1 gezeigt ist, integriert ist, und
- Figur 3: einen V-förmigen Graben zwischen zwei Segmenten einer Polsterung.

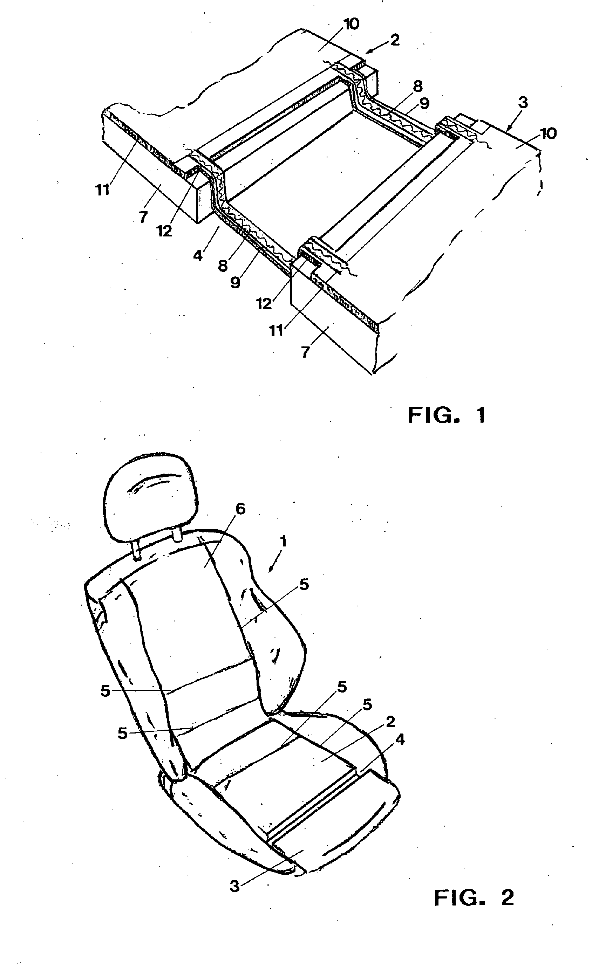

An einem Fahrzeugsitz 1, wie er in Figur 2 gezeigt ist, treten in bestimmten Bereichen der Polsterung Gräben, Einschnitte, Vertiefungen, und dergleichen, auf, die die verschiedenen Polsterbereiche voneinander trennen. Ein solcher Graben ist beispielsweise auch zwischen der Sitzfläche 2 und der Sitztiefenverlängerung 3 (Verlängerungsbereich der Sitzfläche 2) vorhanden und in Figur 2 mit dem Bezugszeichen 4 gekennzeichnet. Weitere Vertiefungen, Einschnitte, und dergleichen, zwischen zwei Polsterabschnitten, sind mit dem Bezugszeichen 5 markiert.

Üblicherweise ist ein solcher Fahrzeugsitz 1 mit einer Sitzheizung versehen, die im Bereich der Sitzfläche 2, aber auch im Bereich der Rückenlehne 6 oder im Bereich der seitlichen Wangen, in den Sitz integriert ist. Eine solche Sitzheizung umfasst Heizelemente mit Heizleitern, die den jeweiligen Abschnitten der Polsterung zugeordnet sind.

Ein Problem ergibt sich in Verbindung mit dem Sitz 1, wie er in Figur 2 gezeigt ist, dadurch, dass die einzelnen Sitzelemente bzw. deren Heizleiter im Bereich der Gräben 4 oder Vertiefungen 5 miteinander elektrisch verbunden werden müssen. Gemäß der Erfindung wird dies, entsprechend der Darstellung der Figur 1, dadurch gelöst, dass zwischen den Segmenten 7 aus einem Polstermaterial der Sitzfläche 2 und der Sitztiefenverlängerung 3 zwei elektrisch verbindende Leiter 8 vorgesehen sind, die in Wellen verlaufen. Diese elektrischen Leiter 8 sind auf einem Kunststoff-Folienstreifen 9, der einen Träger bildet, aufgelegt.

Elektrischer Leiter 8 und Folienstreifen 9 stehen in einem wärmeleitenden Kontakt miteinander und können darüber hinaus durch ein Klebemittel, beispielsweise ein Acrylklebeband, verklebt sein. Der Folienstreifen 9, der eine Dicke im Bereich von 50 bis 100 µm aufweisen kann, dient als eine Verstärkung für den elektrischen Leiter 8; darüber hinaus ist der Folienstreifen 9 so dimensioniert, dass er nur einen Biegeradius zulässt, der dem kleinsten, zulässigen Biegeradius des elektrischen Leiters 8 entspricht, ohne dass dieser durch Knick- oder Biegebeanspruchungen zerstört wird.

Wie anhand der Figur 1 zu erkennen ist, ist der Folienstreifen 9 mit dem elektrischen Leiter 8 durch den Graben 4 so geführt, dass er sich zwischen den beiden zu verbindenden Heizelementen 10, die auf einem Nadelvlies 11 aufliegen, das wiederum von den Polstersegmenten 7 getragen wird, entlang der Kanten der Segmente 7 anschmiegt und über den Boden des Grabens 4 verläuft. Sowohl die Heizelemente 10 als auch die elektrischen Leiter 8 sind mit einer Isolierung 12, bevorzugt aus einer Polyurethanfolie, abgedeckt. Durch diese Art der Verbindung der beiden Heizelemente 10 werden die elektrischen Leiter 8 vor mechanischen Ermüdungen aufgrund von mechanischen Beanspruchungen während des Fahrbetriebs und auch aufgrund der wiederholten Verstellung der Sitztiefenverlängerung 3 in ihrem Abstand relativ zu ihrer Sitzfläche 2 geschützt. Darüber hinaus wird aufgrund des Kunststoff-Folienstreifens 9 die von dem elektrischen Leiter 8 beim Betrieb der Sitzheizung (Heizelemente 10) erzeugte Wärme abgeleitet.

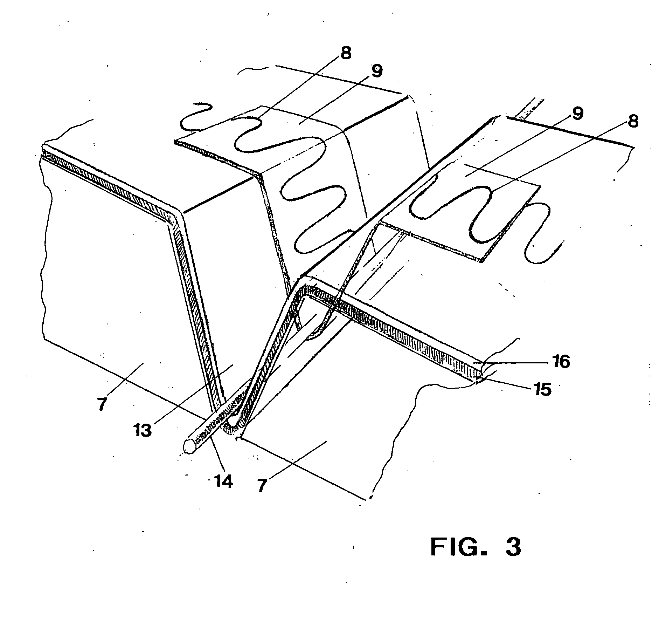

Figur 3 zeigt eine Teilansicht von zwei Polstersegmenten 7, die durch eine V-förmige Vertiefung 13 getrennt sind. Die beiden Heizelemente, die nicht näher gezeigt sind, sind wiederum über elektrische Leiter 8 verbunden, die auf einem Kunststoff-Folienstreifen 9 aufgebracht sind. Kunststoff-Folienstreifen 9 mit dem elektrischen Leiter 8 sind zur Verbindung der Heizelemente durch die V-förmige Vertiefung 13 geführt, so dass sich ein V-förmiger Verlauf ergibt. Darüber hinaus ist der Folienstreifen 9 mit dem Leiter 8 am Boden der V-förmigen Vertiefung 13 durch einen Spanndraht 14 gehalten.

Der Querschnittsaufbau der Polsterung der Figur 3 umfasst oberhalb der Polstersegmente 7 ein erstes Nadelvlies 15 sowie ein zweites Nadelvlies 16, zwischen denen der Kunststoff-Folienstreifen 9 sowie der darauf angeordnete elektrische Leiter 8 zwischengefügt sind und somit zur Außenseite hin isoliert sind. Der Kunststoff-Folienstreifen 9 mit dem elektrischen Leiter 8 kann zwischen die beiden Nadelvliese 15 und 16 eingeklebt werden. Auch bei dieser Anordnung, wie sie in Figur 3 gezeigt ist, wird der wellenförmig verlaufende Leiter 8 durch den Folienstreifen 9 mechanisch entlastet, da die auftretenden Beanspruchungen bei Biegungen und Knicken im Wesentlichen durch den Kunststoff-Folienstreifen 9 aufgenommen werden.

Während die Figuren 1 und 3 schematisch jeweils einen schmalen Folienstreifen 9 mit einem wellenförmig darauf verlaufenden elektrischen Leiter 8 darstellen, kann diese Anordnung in verschiedener Art und Weise geändert werden; beispielsweise kann das Verlegemuster des elektrischen Leiters in anderer Weise erfolgen, wobei allerdings sichergestellt werden sollte, dass die verlegte Länge des elektrischen Leiters 8 größer ist als der Verbindungsweg zwischen den zu verbindenden Heizelementen bzw. die Länge des Kunststoff-Folienstreifens 9, auf den die elektrischen Leiter 8 aufgebracht sind. Auch können die elektrischen Leiter 8 aus mehreren Filamenten aufgebaut werden. Schließlich kann der elektrische Leiter 8 auf dem Folienstreifen 9, anstelle davon, dass er auf dem Folienstreifen 9 verklebt wird, mittels Nähfäden angenäht werden.

## Patentansprüche

1. Elektrische Sitzheizung mit Heizleitern, die in mindestens zwei Segmente unterteilt ist, wobei die zwei Segmente durch mindestens einen elektrischen Leiter verbunden sind, **dadurch gekennzeichnet, dass** zwischen den Segmenten (7) entlang des jeweiligen elektrischen Leiters (8) ein Kunststoff-Folienstreifen (9) verläuft.

2. Sitzheizung nach Anspruch 1, **dadurch gekennzeichnet, dass** der Folienstreifen (9) in wärmeleitendem Kontakt mit dem Leiter (8) steht.

3. Sitzheizung nach Anspruch 1 oder 2, **dadurch gekennzeichnet, dass** der Folienstreifen (9) aus Polyimid gebildet ist.

4. Sitzheizung nach Anspruch 1 oder 2, **dadurch gekennzeichnet, dass** der Folienstreifen (9) aus PET gebildet ist.

5. Sitzheizung nach einem der Ansprüche 1 bis 4, **dadurch gekennzeichnet, dass** der elektrische Leiter (8) mit dem Folienstreifen (9) durch ein Klebemittel verbunden ist.

6. Sitzheizung nach Anspruch 5, **dadurch gekennzeichnet, dass** als Klebemittel ein Acrylatklebeband eingesetzt wird.

7. Sitzheizung nach einem der Ansprüche 1 bis 6 **dadurch gekennzeichnet, dass** der Folienstreifen (9) eine Dicke von 50 bis 500 µm aufweist.

8. Sitzheizung nach einem der Ansprüche 1 bis 7, **dadurch gekennzeichnet, dass** der elektrische Leiter (8) mit dem Folienstreifen (9) in direktem Kontakt steht.

9. Sitzheizung nach einem der Ansprüche 1 bis 8, **dadurch gekennzeichnet, dass** sowohl der elektrische Leiter (8) als auch der Folienstreifen (9) zwischen einer oberen und/oder unteren Decklage (16, 15) eingebettet sind.

10. Sitzheizung nach einem der Ansprüche 1 bis 9, **dadurch gekennzeichnet, dass** die beiden Heizelemente (10) sowie der Folienstreifen (9) mit dem elektrischen Leiter (8) durch eine obere und/oder eine untere Decklage (16, 15) abgedeckt sind.

11. Sitzheizung nach einem der Ansprüche 1 bis 10, **dadurch gekennzeichnet, dass** der elektrische Leiter (8) Teil der die Wärme erzeugenden Heizleiter der Heizelemente (10) ist.

12. Sitzheizung nach einem Ansprüche 1 bis 11, **dadurch gekennzeichnet, dass** der elektrische Leiter (8) aus dem Heizleiter gebildet ist und dieser ohne Unterbrechung von Heizelement (10) zu Heizelement (10) geführt ist.

13. Sitzheizung nach einem der Ansprüche 1 bis 12, **dadurch gekennzeichnet, dass** der elektrische Leiter (8) ein zum Heizleiter unterschiedlicher Brückenleiter ist, der die Heizleiter der Heizelemente (10) elektrisch verbindet.

14. Sitzheizung nach einem der Ansprüche 1 bis 13, **dadurch gekennzeichnet, dass** der elektrische Leiter (8) eine Isolierung aus einem Material aufweist, das dem Material des Folienstreifens (9) entspricht.

15. Sitzheizung nach einem der Ansprüche 1 bis 14, **dadurch gekennzeichnet, dass** der Heizleiter mittels Sticktechnik auf einem Träger aufgebracht ist.

16. Sitzheizung nach einem der Ansprüche 1 bis 15, **dadurch gekennzeichnet, dass** der elektrische Leiter (8) mittels Nähfaden auf dem Folienstreifen (9) aufgestickt ist.

17. Sitzheizung nach einem der Ansprüche 1 bis 16, **dadurch gekennzeichnet, dass** der elektrische Leiter (8) wellenförmig über den Folienstreifen (9) verläuft.

18. Sitzheizung nach einem der Ansprüche 1 bis 17, **dadurch gekennzeichnet, dass** der elektrische Leiter (8) aus einer Litze, die mehrere Filamente aufweist, gebildet ist, wobei die einzelnen Filamente jeweils eine separate Isolierung tragen.

19. Sitzpolsterung mit einer Sitzheizung nach einem der Ansprüche 1 bis 18, wobei die Polsterung mindestens zwei Segmente aufweist, die durch Gräben und/oder Taschen und/oder Schubladen getrennt sind, und wobei jedem Segment ein Heizelement mit Heizleitern zugeordnet ist und die Heizelemente der Segmente durch mindestens einen elektrische Leiter verbunden sind, wobei zwischen den Segmenten (7) entlang des jeweiligen elektrischen Leiters (8) ein Kunststoff-Folienstreifen (9) verläuft.
